# EUROPEAN PATENT SPECIFICATION

(11) **EP 0 656 840 B1**
(45) Date of publication and mention of the grant of the patent: **18.12.1996**
(21) Application number: 93920306.3
(22) Date of filing: 24.08.1993
(51) Int. Cl.: B60K 28/16, B60T 8/00

(54) **WHEEL TRACTION CONTROL FOR AUTOMOTIVE VEHICLE**
RAD-VORTRIEBSSTEUERUNG FUR KRAFTFAHRZEUGE
SYSTEME D'ANTIPATINAGE A L'ACCELERATION POUR VEHICULE AUTOMOBILE

(30) Priority: 25.08.1992 US 934608
(43) Date of publication of application: 14.06.1995
(73) Proprietor: AlliedSignal Inc., Morristown, New Jersey 07962-2245 (US)
(72) Inventor: SINGLETON, William, Andrew, Grafton, OH 44044 (US); BURNS, Robert, Dale, North Royalton, OH 44133 (US)
(74) Representative: Allen, William Guy Fairfax
(86) International application number: US9307960
(87) International publication number: WO9404385

(56) References cited:
- EP-A- 0 270 092
- EP-A- 0 397 330
- EP-A- 0 449 333
- WO-A-81/03151
- WO-A-81/03152

## Description

This invention relates to a traction control method for a vehicle.

Undesirable wheel slippage may result when a vehicle is accelerated. Such slippage may occur when the drive wheel on one side of the vehicle rests on a surface with a low coefficient of friction and the drive wheel on the other side rests on a surface has a higher coefficient of friction, or when both drive wheels rest one surface have a uniformly low coefficient of friction. In either case, the drive wheel begins spinning while the other drive wheel remains stationary. In such cases, the vehicle may be immobilized because all power is transferred to the spinning wheel, while the opposite wheel is immobilized because the vehicle differential transfers all power to the spinning wheel. Traction control systems have been proposed to mitigate this problem. Such traction control systems usually include a brake control system, in which braking pressure is applied to the brake controlling the spinning wheel, so that some power is applied to the other wheel. In prior art systems, a constant braking pressure is applied to the spinning wheel, or braking pressure is ramped up and down at predetermined rates such as disclosed in US-A-4,823,269 wherein fluid pressure supplied to the driven wheel is proportional to the sum of the spin acceleration and the spin amounts between the driven wheels as compared to a threshold value for such fluid pressure.

Thus US-A-4,823,269 discloses a traction control method for a vehicle having a pair of driven wheels and a pair of non-driven wheels, each of said driven wheels being controlled by brakes actuated by fluid pressure, comprising the steps of measuring the wheel speeds of both the driven and non-driven wheels, calculating a reference velocity as a function of the wheel speed of at least one of the non-driven wheels, comparing the wheel speeds of the driven wheels with the reference velocity during a set time period, activating traction control of the one driven wheel with the higher wheel speed if said higher wheel speed is also greater than the reference velocity, establishing a desired pressure level for the brake controlling said one driven wheel, and communicating a current fluid pressure level equal to said desired pressure level to the brake controlling said one driven wheel, said desired pressure level being established as a function of the magnitude of any difference between the actual wheel speed of said one driven wheel and the reference velocity upon activating traction control of said one driven wheel taking into consideration the wheel acceleration of said one driven wheel to establish said current pressure level, which is selectively supplied to said driven wheel during each time period.

In all of such prior art operating systems, the supply of fluid pressure based on such operational controls introduces vibration and drive line stresses which are not only uncomfortable, but may damage the vehicle components. It is also common to provide a throttle control that works with the brake control, in which the power applied by the vehicle is limited or controlled to minimize wheel slip. The present invention relates to the wheel control portion of the system, and is preferably used with a throttle control system.

Starting from US-A-4,823,269, the present invention is characterised in that said current pressure level is modified from a previous pressure level of an immediate current pressure level by a magnitude corresponding to the difference between any increases and decreases between the actual wheel speed of said one driven wheel and the reference velocity, and inhibited from operating said wheel brake during activation of traction control in said one driven wheel if the current pressure level in the brake controlling either of said driven wheels is above said predetermined pressure level.

The present invention controls braking pressure in the spinning wheel as a function of wheel acceleration and as a function of the difference between the speed of the spinning wheel and a velocity reference, which is established by measuring the wheel speed of the non-driven wheels of the vehicle. When the speed of the spinning wheel drops below the velocity reference, the braking pressure is ramped down to assure smooth transition to the normal driving state from the traction control state. Accordingly, smooth operation of the system is assured, and the drive line stresses that occur in systems using "on/off" control is minimized. These and other features of the present invention will become apparent from the following description, with reference to the accompanying drawings, in which:
Figure 1 is an overall system schematic of a braking system incorporating traction control made pursuant to the teachings of the present invention; and
Figures 2a, 2b, 2c and 2d are a schematic logic diagram illustrating the manner in which the traction control system according to the present invention controls the driven wheels of the vehicle incorporating the system illustrated in Figure 1.

Referring now to the drawings, an electropneumatic braking system generally indicated by the numeral 10 includes a central or master controller generally indicated by the numeral 12. The master controller 12, for redundancy, preferably receives power from each of two 24 volt sources indicated at 14 and 16. A brake treadle signal generator generally indicated by the numeral 18 is mounted in the operator's compartment of the vehicle. Preferably, the signal generator 18, for redundancy, simultaneously generates two independent signals, each of which vary in accordance with the distance that the driver has pressed the brake treadle. These independent signals are transmitted to the central or master controller 12 through independent wires 20, 22.

The central or master controller 12 is connected by a data transmission line 24a to a left front wheel controller 26a, which controls a left front wheel brake pressure modulator 28a. Similarly, data transmission lines 24b, 24c, and 24d connect the central or master controller 12 with respectively a left rear wheel controller 26b, a right rear wheel controller 26c, and a right front wheel controller 26d. The left rear wheel controller 26b controls a left rear wheel modulator 28b; right rear wheel controller 26c controls right rear wheel modulator 28c; and right front wheel controller 26d controls right front wheel modulator 28d. A pressure sensor 30a transmits a signal representing the actual braking pressure transmitted to the left front wheel brake by the modulator 28a to the left front wheel controller 26a. Similarly, pressure sensor 30b transmits a signal representing the left rear wheel braking pressure to the left rear wheel controller 26b; pressure sensor 30c transmits a braking signal representing actual right rear wheel braking pressure to controller 26c; and pressure sensor 30d transmits a signal representing actual right front wheel brake pressure to the right front wheel controller 26d. Each of the modulators 28a-d responds to current transmitted to their corresponding coil 32a-d to control braking pressure in the brake controlled by the modulator to achieve a braking pressure proportional to the current in the corresponding coil. Speed sensor 34a generates a signal which is transmitted to the central controller 12 through the left front wheel controller 26a and which varies in accordance with the rotational speed of the left front wheel indicated schematically at 36a. Similarly, wheel speed sensors 34b, 34c and 34d generate signals which vary in accordance with the rotational speeds of their corresponding wheels indicated schematically at 36b, 36c, and 36d, and which are similarly transmitted to the master controller 12.

The main or central controller 12 processes the signals generated by the brake pedal signal generator 18 by scaling the signals, selecting one of the signals according to a predetermined protocol which determines if one or both of the signals is a malfunctioning signal, and sequentially transmits a signal representing desired braking pressure to each of the controllers 26a-d through the data transmission lines 24a-d when the vehicle operator operates the brake treadle 18. As will hereinafter be discussed, the central controller 12 also monitors signals generated by the wheel speed sensors 34a-d even when the operator is not applying the brakes of the vehicle. When the relationships between the speed signals indicate that one of the driving wheels may be slipping during vehicle acceleration, the central controller transmits signals to one of the driven wheels 36b or 36c to apply the brake of the faster rotating wheel to permit power to be transmitted to the other driven wheel. It is assumed in the following discussion that the driven wheels are the rear wheels of the vehicle (36b and 36c), and that the non-driven wheels are the front wheels of the vehicle (wheels 36a and 36d), but the invention is also applicable to front wheel drive vehicles. Data is received from each of the pressure sensors 30a-d and wheel speed sensors 34a-d once each 15 milliseconds. The information is processed by the central controller 12 and a new brake pressure signal is generated (during braking) and transmitted to the controllers 26a-d also once every 15 milliseconds. Even when the brakes are released, as herein later will be described, the central controller 12 receives data from the speed sensors 34a-3 and processed the data to determine if a situation exists which one of the driven wheels 36b or 36c is slipping. If a such a slipping condition is determined, a signal controlling the modulator 28b or 28c is calculated and transmitted to the corresponding modulator every 15 milliseconds. Accordingly, the desired pressure of the brakes control the driven wheel being braked during traction control is recalculated every 15 milliseconds, as will hereinafter be more fully described.

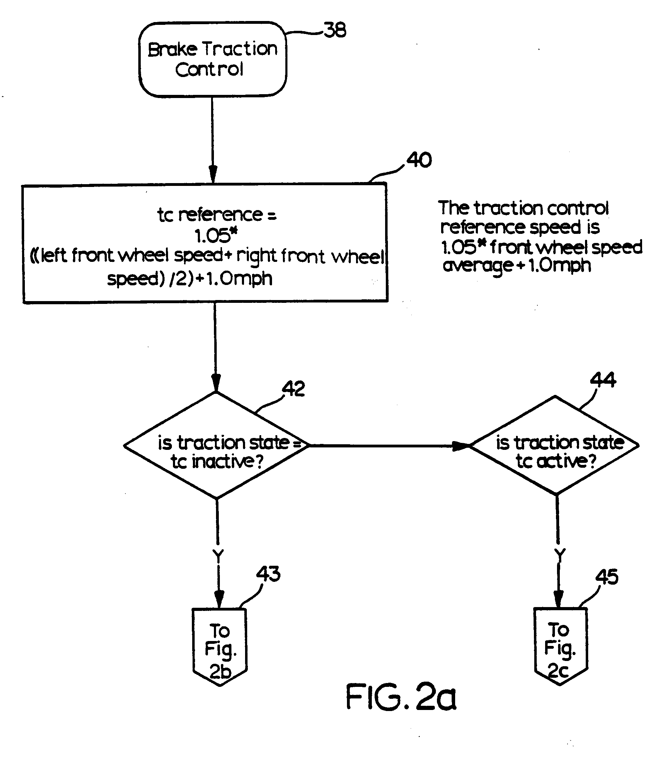

Referring now to Figures 2a-d, the brake traction control is started as indicated at 38, and is active at all times that power is supplied to the central controller 12. Every 15 milliseconds, as discussed above, the controller 12 calculates a new traction control reference of velocity as indicated at 40. This reference of velocity is calculated as 1.05 times the average velocity of the non-driven wheels (in this case, the left front wheel and the right front wheel), plus one mile per hour. This reference, of course, is slightly greater than the vehicle velocity, and, as will be seen, is a reference to which the speeds of the rear or driven wheels will be compared to determine if the driven wheels are slipping. Since the reference is slightly greater than the front wheel speeds, some wheel slip will be tolerated to account for suspension deflection, tire deformation, etc.

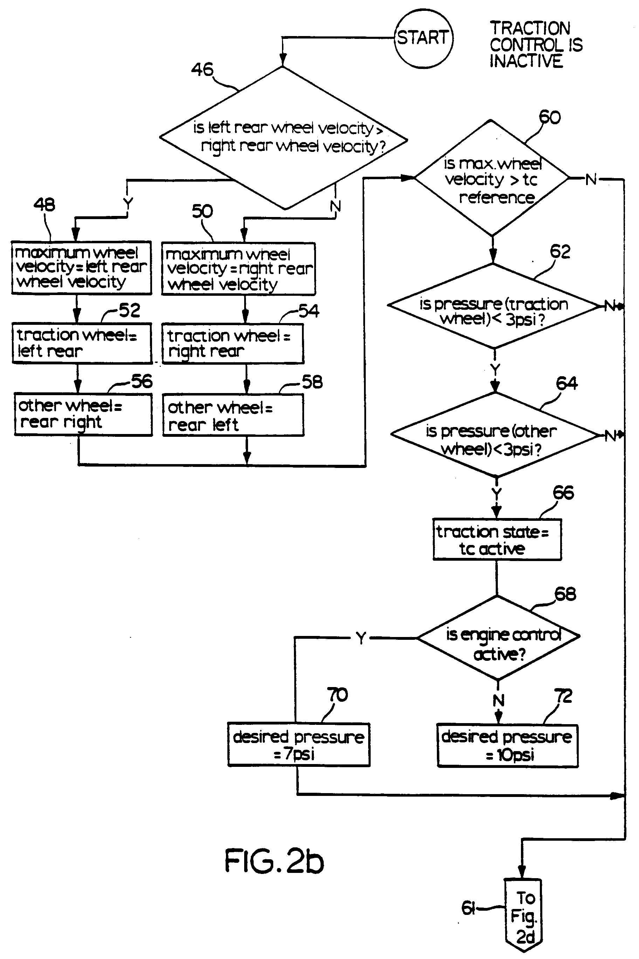

A test then made to determine if traction control has been initiated. As will be discussed hereinbelow, the traction control is declared active or inactive depending upon predetermined tests as will hereinafter be explained. Accordingly, the test is made as indicated at 42 and 44 in Figure 2a. If the traction state is inactive, the program branches to Figure 2b, as indicated at 43, and if the traction state is active, the program branches to 2c, as indicated at 45.

Referring to Figure 2b, the left rear wheel velocity is compared to the right rear wheel velocity as indicated at 46 in Figure 2b to determine the faster rotating wheel. As indicated at 48 and 50 and the maximum wheel velocity is then set equal to the left or right rear wheel velocity respectfully. As indicated at 52 and 54, the traction wheel is either the left rear or right rear wheel, depending upon which is the faster rotation wheel. As indicated at 56 and 58, the other wheel is declared to be the right rear or left rear, whichever is the slower rotating wheel.

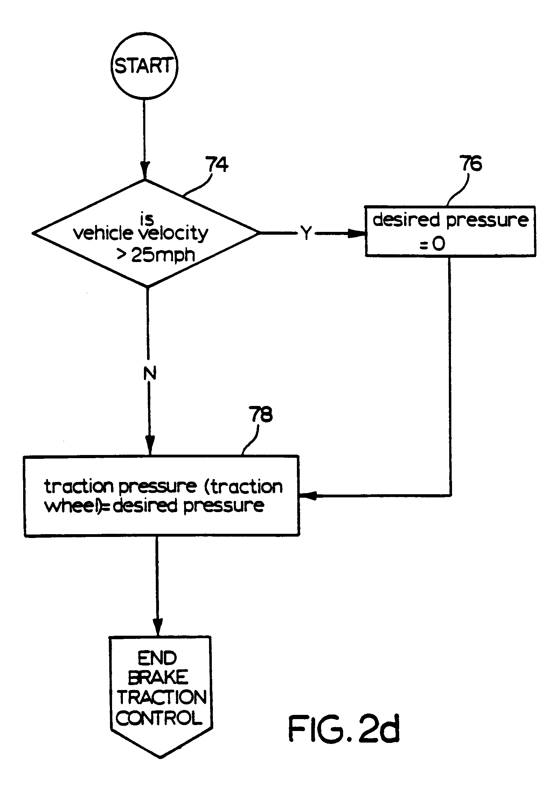

The maximum wheel velocity, established at 48 and 50, is then compared to the reference velocity, calculated at 40 in Figure 2a. The comparison is made at 60 in Figure 2b. If the maximum wheel velocity is less than the reference velocity, traction control is not necessary and the program branches to Figure 2d, as indicated at 61. If the maximum wheel velocity is greater than the reference velocity, a wheel slipping condition is present. However, it is necessary to determine if the brake controlling the other wheel is in traction control. Accordingly, tests are made at 62 and 64, to determine if the pressure in the brake controlling either wheel is greater than 3 psi. This pressure check is necessary to prevent having pressure applied to both rear wheel brakes at the same time, which would brake the vehicle while the driver is trying to accelerate the vehicle, and would induce undesirably large drive line stresses. Assuming that the pressure level in neither of the rear or driven wheels are above 3 psi, the traction control placed in the active state, as indicated at 66.

As described above, the wheel traction control according to the present invention may be used with an engine throttle control, in which the power generated by the engine is limited to control drive wheel slipping. Although the controls are fundamentally independent of one another, the wheel traction control according to the present invention does set an initial pressure for controlling the brake of the traction wheel depending upon whether or not the engine control is active. This test is made at 68 in Figure 2b. If the engine control is active, a lower initial braking pressure of the traction wheel of 7 psi is set as indicated at 70 in Figure 2b. If the-engine control is not active, a higher initial desired pressure of 10 psi is set as indicated at 72 in Figure 2b. The pressures set at 70 and 72 in Figure 2b are only temporary pressures, and are used only while the system is transistioning to the active state. As also described hereinabove, the program cycles every 15 milliseconds, so that a new pressure is calculated and applied every 15 milliseconds. Accordingly, during the next calculation cycle, a new desired pressure will be calculated.

The program then branches to Figure 2d, as indicated at 61, where the vehicle velocity, which is taken as the average of the front wheel speed or the speeds of the undriven wheels, is tested at 74 to determine if the vehicle exceeds 25 mph. If the vehicle velocity does exceed 25 mph, no pressure is applied to either of the driven wheels, because of vehicle stability considerations. Accordingly, the desired pressure is set at zero as at 76. If the traction state is active, the traction pressure of the traction wheel is set equal to the desired pressure, as indicated at 78. It should be noted that if the traction state is not active, no desired pressure will have been calculated and thus the desired pressure set at 78 will be equal to 0. Accordingly, zero desired pressure is set if the maximum wheel velocity does not exceed the traction control reference, or if pressure in either of the driven wheels exceeds 3 psi.

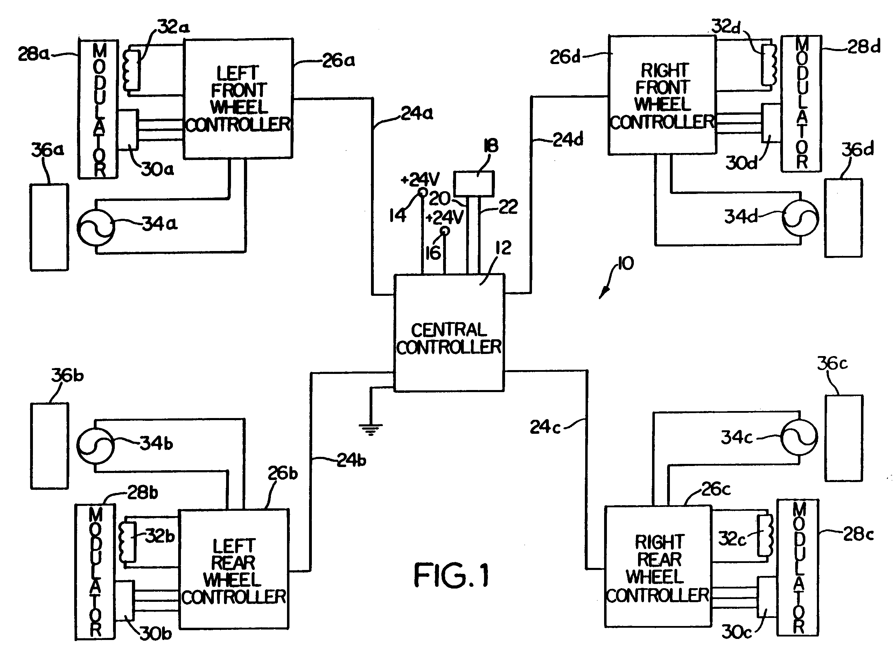

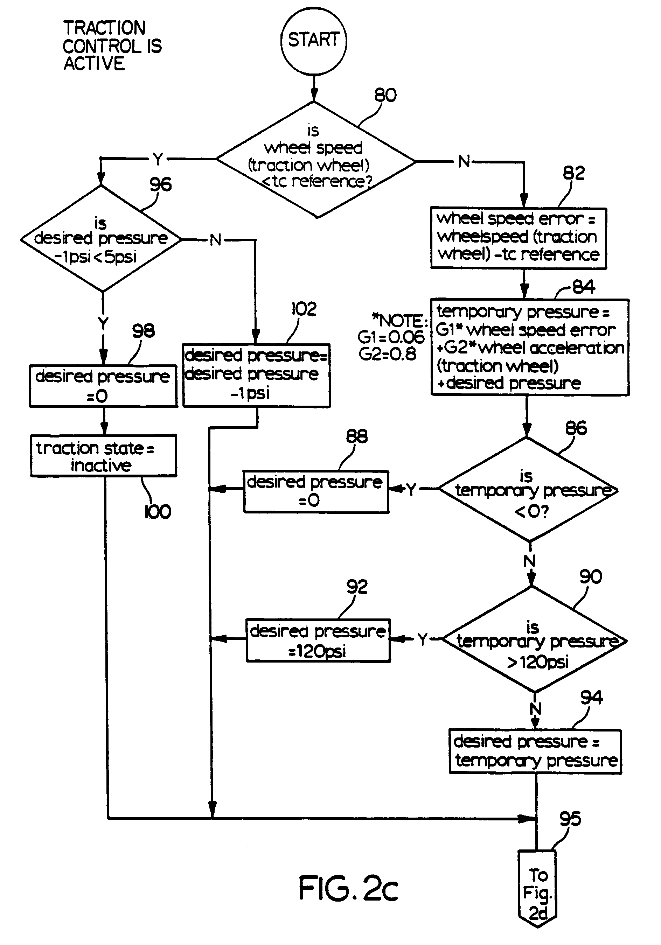

If the traction state is active as determined at 44 in Figure 2a, the program branches to the subroutine set forth in Figure 2c. As indicated at 80, the wheel speed of the traction wheel is compared to the traction control velocity reference calculated at 40 in Figure 2a. If the wheel speed is above the velocity reference, the program sets wheel speed error as being equal to the difference between the measured wheel speed of the traction wheel and the traction control reference velocity calculated at 40 in Figure 1, as indicated at 82. A temporary braking pressure which is to be applied to the brake controlling the traction wheel is calculated as indicated at 84 as being equal to a constant G1 times the wheel speed error calculated at 82 plus a constant G2 times wheel acceleration o the traction wheel (which is calculated from wheel speed measured from the traction wheel using techniques well known to those skilled in the art) plus the desired pressure calculated during the last pass through the program. The desired pressure may either be the desired pressure calculated using the routine indicated in Figure 2c, or the desired pressure may be the desired pressure set at 70 or 72 in the subroutine illustrated in Figure 2b during the transition to active traction control.

The constant G1 is determined empirically for the vehicle upon which the system is used, but a typical value is 0.06; accordingly, a pressure increase of 0.6 psi occurs for a 10 mph wheel speed error. A typical value for the constant G2 is 0.8 so that a change of 0.8 psi in pressure occurs for a 1g change in wheel acceleration. The temporary pressure calculated at 84 is then tested at 86 to determine if the calculated temporary pressure is less than 0. If the temporary pressure is less than zero, the desired pressure is set equal to zero as indicated at 88. The temporary pressure is then tested to determine if the calculated temporary pressure is greater than 120 psi, as indicated at 90. If the temporary pressure is greater than 120 psi, the desired pressure is set equal to 120 psi as indicated at 92. Assuming that the temporary pressure calculated at 84 is neither less than zero nor greater than 120 psi, the desired pressure is set equal to the temporary pressure as indicated at 94. The program then branches to the subroutine described above and illustrated in Figure 2d, as indicated at 95, where the vehicle velocity is tested to determine if the vehicle velocity is greater than 25 mph and the traction pressure of the traction wheel is set equal to the desired pressure.

If the wheel speed of the traction wheel is less than the reference velocity calculated at 40 in 2a and as determined at 80 in Figure 2c, it is desirable to reduce the pressure applied to the brake controlling the traction wheel, as traction control is no longer necessary. However, it is undesirable to abruptly drop pressure from a high pressure level to zero, as severe drive line stresses may result. Accordingly, the desired pressure is tested at 96 in Figure 2c to determine if the desired pressure, less -1 psi, is less than 5 psi. If the desired pressure, less -1 psi, is less than 5 psi, the pressure is so small that it may be set to zero without harm. Accordingly, the desired pressure is set equal to zero as indicated at 98 in Figure 2c and the traction state is declared inactive, as i indicated at 100 in Figure 2c. Accordingly, since the traction state has been declared inactive, the calculation made during the next pass throught the program will be made using the subroutine indicated in Figure 2b.

If the desired pressure, less 1 psi, is greater than 5 psi, it is desirable to gradually ramp down the pressure until the pressure becomes less than 5 psi. Accordingly, as indicated at 102, the desired pressure is set equal to the desired pressure calculated in the last cycle, -1 psi. Accordingly, the desired pressure level will be decreased by 1 psi every 15 milliseconds as long as the wheel speed of the traction wheel remains less than the traction control velocity reference. Eventually, however, the desired pressure, -1 psi, will become less than 5 psi, and the desired pressure will be set equal to zero and the traction state deactivated.

In operation, the wheel traction control is used when one of the drive wheels loses traction and spins out. This condition may occur on a uniform low coefficient surface, or on split coefficient surfaces. Accordingly, it is desirable to apply braking pressure to the brake controlling the rear wheel which is detected as spinning. If pressure is not applied, the wheel will continue to spin and the vehicle will not move since all torque applied by the engine will be transferred to the spinning wheel and insufficient torque will be applied to the wheel on the higher coefficient surface. When braking pressure is applied to the spinning wheel, the wheel speed of the spinning wheel will decrease, thereby transferring torque to the other wheel.

As discussed above, the wheel traction control has both an active state and inactive state. The program cycles every 15 milliseconds. During each cycle, the traction control velocity reference is calculated as set forth at 40 in Figure 2a. If the traction control is inactive, the program branches to the subroutine illustrated in Figure 2b. In this subroutine, the wheel having the larger velocity is determined and declared the traction wheel. The maximum velocity is then tested against the reference calculated at 40 in Figure 2a, and at 60 in Figure 2b. If the maximum wheel velocity (that is, the velocity of the faster rotating wheel) is greater than the reference velocity, the traction state is declared active at 66 in Figure 2b, provided that the braking pressure in either brake controlling the rear wheels does not exceed 3 psi. A temporary desired pressure, to be used to set braking pressure of the spinning wheel during the transition from the inactive traction state to the active traction state is set as indicated at 70 and 72 of Figure 2b.

During the next calculation cycle, and all succeeding calculation cycles as long as the traction state is declared as active and has not been reset to inactive, the subroutine illustrated in Figure 2c is used. As long as the wheel speed of the traction wheel is above the reference level calculated at 40 in Figure 2a, the pressure in the brake controlling the traction wheel is set as a function of the difference between the speed of the traction wheel and the wheel reference velocity, plus a term which is a function of wheel acceleration, plus the desired pressure calculated on the previous pass through the program, all as indicated at 84 in Figure 2c. Accordingly, as the wheel speed of the traction wheel increases above the velocity reference, the error term (the difference between actual wheel speed and the wheel velocity reference) will increase and a positive wheel acceleration will also be measured. Accordingly, both of the terms set forth at 84 will be positive and will cause the desired pressure to increase. When the braking pressure applied to the spinning wheel causes the wheel to begin decelerating, the error term will still be positive, because the wheel speed will still be above the speed reference. However, the acceleration term will be negative, which will slow the rise in desired pressure, possibly generating a slow pressure decrease as the wheel continues to decelerate and the difference between the wheel speed and the wheel velocity reference decreases. When the wheel gets close to the wheel velocity reference, the error term will have negligible effect, and the acceleration term will dominate to continue the calculated decrease in desired braking pressure of the spinning wheel. When the wheel speed drops below the wheel velocity reference, traction control is no longer necessary, but it is undesirable to quickly drop the brake control pressure to 0, because of the large drive line stresses that may result. Accordingly, once the wheel speed of the traction wheel drops below the wheel velocity reference, the desired pressure is decreased by 1 psi during each pass through the program, as indicated at 102 in Figure 2c. When the desired pressure (less 1 psi) drops below 5 psi, the desired pressure may be set equal to 0, as indicated at 98, without damage to the vehicle. Accordingly, the traction state is then declared inactive.

If a vehicle velocity exceeds 25 mph, it is not desirable to use wheel traction control, because of vehicle stability considerations. At these relatively high speeds, the aforementioned engine throttle control (which is not part of the present invention) must be used to control wheel spin, if the vehicle is so equipped. The test for vehicle velocity is made at 74 in Figure 2d.

## Claims

1. Traction control method for a vehicle having a pair of driven wheels (36b,36c) and a pair of non-driven wheels (36a,36d), each of said driven wheels (36b,36c) being controlled by brakes actuated by fluid pressure, comprising the steps of measuring the wheel speeds of both the driven (36b,36c) and non-driven wheels (36a,36d), calculating a reference velocity as a function of the wheel speed of at least one of the non-driven wheels (36a,36d), comparing the wheel speeds of the driven wheels (36b,36c) with the reference velocity during a set time period, activating traction control of the one driven wheel (36b or 36c) with the higher wheel speed if said higher wheel speed is also greater than the reference velocity, establishing a desired pressure level for the brake controlling said one driven wheel (36b or 36c), and communicating a current fluid pressure level equal to said desired pressure level to the brake controlling said one driven wheel (36b or 36c), said desired pressure level being established as a function of the magnitude of any difference between the actual wheel speed of said one driven wheel (36b or 36c) and the reference velocity upon activating traction control of said one driven wheel (36b or 36c) taking into consideration the wheel acceleration of said one driven wheel (36b or 36c) to establish said current pressure level, which is selectively supplied to said driven wheel (36b,36c) during each time period characterised in that said current pressure level is modified from a previous pressure level to an immediate current pressure level by a magnitude corresponding to the difference between any increases and decreases between the actual wheel speed of said one driven wheel and the reference velocity, and inhibited from operating said wheel brake during activation of traction control in said one driven wheel (36b or 36c) if the current pressure level in the brake controlling either of said driven wheels (36b,36c) is above said predetermined pressure level.

2. Traction control method as claimed in Claim 1, further characterized in that said method includes the step of setting said desired pressure level at a predecided pressure level greater than a zero pressure level upon activating traction control of said one driven wheel (36b or 36c).

3. Traction control method as claimed in Claim 2, wherein said vehicle includes an engine control subsystem activated to control the vehicle engine under predetermined wheel slippage conditions of said driven wheels (36b,36c), further characterized in that said method includes the step of changing said predecided pressure level if one engine control subsystem has been activated when traction control of said one driven wheel (36b or 36c) is activated.

4. Traction control method as claimed in Claim 2, further characterized in that said method includes the steps of adding a function of the wheel acceleration of said one wheel to the previously determined desired pressure level during each calculation cycle and adding a function of the difference of the wheel speed of said one wheel and said reference velocity to the previously determined desired pressure level during each calculation to establish a new value of the desired pressure level for the calculation cycle.

5. Traction control method as claimed in Claim 3, further characterized in that said method includes the steps of establishing when the wheel speed of said one driven wheel (36b or 36c) drops below the reference velocity and decreasing said desired pressure level by a predetermined increment during each succeeding calculation cycle as long as traction control of said one driven wheel (36b or 36c) remains activated and said one driven wheel (36b or 36c) remains below said reference velocity.

6. Traction control method as claimed in Claim 5, further characterized in that said method includes the steps of setting the desired pressure level equal to zero and deactivating traction control for said one driven wheel (36b or 36c) when the calculated desired pressure level drops below a preestablished pressure level.

7. Traction control method as claimed in Claim 1, further characterized in that said method includes the step of deactivating traction control of said one driven wheel (36b or 36c) if the reference velocity exceeds a predetermined limit.

## Patentansprüche

1. Antriebsschlupfregelverfahren für ein Fahrzeug mit einem Paar angetriebener Räder (36b, 36c) und einem Paar nicht angetriebener Räder (36a, 36d), wobei jedes der angetriebenen Räder (36b, 36c) von durch Fluiddruck betätigten Bremsen gesteuert wird, das die folgenden Schritte umfaßt: Messen der Raddrehzahlen sowohl der angetriebenen (36b, 36c) als auch der nicht angetriebenen Räder (36a, 36d), Berechnen einer Bezugsgeschwindigkeit als Funktion der Raddrehzahl von mindestens einem der nicht angetriebenen Räder (36a, 36d), Vergleichen der Raddrehzahlen der angetriebenen Räder (36b, 36c) mit der Bezugsgeschwindigkeit während eines festgelegten Zeitraums, Aktivieren der Antriebsschlupfregelung des einen angetriebenen Rades (36b oder 36c) mit der höheren Raddrehzahl, wenn die höhere Raddrehzahl auch größer ist als die Bezugsgeschwindigkeit, Herstellen eines Solldruckniveaus für die das eine angetriebene Rad (36b oder 36c) steuernde Bremse und Übertragen eines aktuellen Fluiddruckniveaus, das dem Solldruckniveau entspricht, auf die das eine angetriebene Rad (36b oder 36c) steuernde Bremse, wobei das Solldruckniveau als eine Funktion der Größe jeglicher Differenz zwischen der Radistdrehzahl des einen angetriebenen Rades (36b oder 36c) und der Bezugsgeschwindigkeit bei Aktivierung der Antriebsschlupfregelung des einen angetriebenen Rades (36b oder 36c) unter Berücksichtigung der Radbeschleunigung des einen angetriebenen Rades (36b oder 36c) zur Herstellung des aktuellen Druckniveaus, das dem angetriebenen Rad (36b, 36c) während jedes Zeitraums gezielt zugeführt wird, hergestellt wird, dadurch gekennzeichnet, daß das aktuelle Druckniveau um einen Wert, der der Differenz zwischen jeglichen Erhöhungen und Verminderungen zwischen der Radistdrehzahl des einen angetriebenen Rades und der Bezugsgeschwindigkeit entspricht, von einem vorherigen Druckniveau zu einem momentanen aktuellen Druckniveau modifiziert und daran gehindert wird, die Radbremse während der Aktivierung der Antriebsschlupfregelung in dem einen angetriebenen Rad (36b oder 36c) zu betätigen, wenn das aktuelle Druckniveau der Bremse, die eines der angetriebenen Räder (36b, 36c) steuert, über dem vorbestimmten Druckniveau liegt.

2. Antriebsschlupfregelverfahren nach Anspruch 1, weiterhin dadurch gekennzeichnet, daß das Verfahren den Schritt des Einstellens des Solldruckniveaus auf ein vorbestimmtes Druckniveau, das höher ist als ein Nulldruckniveau, bei Aktivierung der Antriebsschlupfregelung des einen angetriebenen Rades (36b oder 36c) enthält.

3. Antriebsschlupfregelverfahren nach Anspruch 2, bei dem das Fahrzeug ein Motorsteuerungsteilsystem enthält, das zur Steuerung des Fahrzeugmotors unter vorbestimmten Radschlupfbedingungen der angetriebenen Räder (36b, 36c) aktiviert wird, weiterhin dadurch gekennzeichnet, daß das Verfahren den Schritt des Änderns des vorbestimmten Druckniveaus, falls das Motorsteuerungsteilsystem aktiviert wurde, wenn die Antriebsschlupfregelung des einen angetriebenen Rades (36b oder 36c) aktiviert wird, enthält.

4. Antriebsschlupfregelverfahren nach Anspruch 2, weiterhin dadurch gekennzeichnet, daß das Verfahren die Schritte des Hinzufügens einer Funktion der Radbeschleunigung des einen Rades zu dem zuvor bestimmten Solldruckniveau bei jedem Berechnungszyklus und des Hinzufügens einer Funktion der Differenz zwischen der Raddrehzahl des einen Rades und der Bezugsgeschwindigkeit zu dem zuvor bestimmten Solldruckniveau bei jeder Berechnung enthält, um einen neuen Wert des Solldruckniveaus für den Berechnungszyklus zu erhalten.

5. Antriebsschlupfregelverfahren nach Anspruch 3, weiterhin dadurch gekennzeichnet, daß das Verfahren die Schritte des Feststellens, wann die Raddrehzahl des einen angetriebenen Rades (36b oder 36c) unter die Bezugsgeschwindigkeit absinkt und des Verminderns des Solldruckniveaus um ein vorbestimmtes Inkrement bei jedem aufeinanderfolgenden Berechnungszyklus, solange die Antriebsschlupfregelung des einen angetriebenen Rades (36b oder 36c) aktiviert bleibt und das eine angetriebene Rad (36b oder 36c) unter der Bezugsgeschwindigkeit bleibt, enthält.

6. Antriebsschlupfregelverfahren nach Anspruch 5, weiterhin dadurch gekennzeichnet, daß das Verfahren die Schritte des Einstellens des Solldruckniveaus auf Null und des Deaktivierens der Antriebsschlupfregelung für das eine angetriebene Rad (36b oder 36c), wenn das berechnete Solldruckniveau unter ein zuvor festgelegtes Druckniveau absinkt, enthält.

7. Antriebsschlupfregelverfahren nach Anspruch 1, weiterhin dadurch gekennzeichnet, daß das Verfahren den Schritt des Deaktivierens der Antriebsschlupfregelung des einen angetriebenen Rades (36b oder 36c), wenn die Bezugsgeschwindigkeit eine vorbestimmte Grenze überschreitet, enthält.

## Revendications

1. Système d'antipatinage à l'accélération pour un véhicule ayant une paire de roues motrices (36b, 36c) et une paire de roues non motrices (36a, 36d), chacune desdites roues motrices (36b, 36c) étant commandée par des freins activés par pression de fluide, comprenant les étapes consistant à mesurer les vitesses de roue des roues motrices (36b, 36c) et des roues non motrices (36a, 36d), à calculer une vitesse de référence en fonction de la vitesse de roue d'au moins une des roues non motrices (36a, 36d), à comparer les vitesses de roue des roues motrices (36b, 36c) à la vitesse de référence au cours d'une période de temps prédéfinie, à activer le système d'antipatinage à l'accélération de l'une des roues motrices (36b ou 36c) ayant la vitesse de roue la plus élevée si ladite vitesse de roue la plus élevée est également supérieure à la vitesse de référence, à établir un niveau de pression souhaité pour le frein commandant ladite une roue motrice (36b ou 36c), et à communiquer un niveau de pression de fluide actuel égal audit niveau de pression souhaité au frein commandant ladite une roue motrice (36b ou 36c), ledit niveau de pression souhaité étant établi en fonction de l'ampleur de la différence éventuelle entre la vitesse de roue effective de ladite une roue motrice (36b ou 36c) et la vitesse de référence à l'activation du système d'antipatinage à l'accélération de ladite une roue motrice (36b ou 36c), compte tenu de l'accélération de roue de ladite une roue motrice (36b ou 36c) pour établir ledit niveau de pression actuel, qui est fourni sélectivement à ladite roue motrice (36b, 36c) durant chaque période de temps, caractérisé en ce que ledit niveau de pression actuel est modifié par rapport à un niveau de pression précédent à un niveau de pression actuel immédiat d'une ampleur correspondant à la différence entre les augmentations ou diminutions éventuelles entre la vitesse de roue effective de ladite une roue motrice et la vitesse de référence, et est rendu incapable de faire fonctionner le frein de ladite roue au cours de l'activation du système d'antipatinage à l'accélération dans ladite une roue motrice (36b ou 36c) si le niveau de pression actuel dans le frein commandant l'une ou l'autre desdites roues motrices (36b, 36c) est au-dessus dudit niveau de pression prédéterminé.

2. Système d'antipatinage à l'accélération selon la revendication 1, caractérisé en outre en ce que ledit système comporte l'étape consistant à prédéfinir ledit niveau de pression souhaité à un niveau de pression décidé préalablement supérieur à un niveau de pression zéro à l'activation du système d'antipatinage à l'accélération de ladite une roue motrice (36b ou 36c).

3. Système d'antipatinage à l'accélération selon la revendication 2, dans lequel ledit véhicule comporte un sous-système de commande du moteur activé pour commander le moteur du véhicule dans des conditions prédéterminées de patinage de roue desdites roues motrices (36b, 36c), caractérisé en outre en ce que ledit système comporte l'étape consistant à changer ledit niveau de pression décidé préalablement si le sous-système de commande du moteur a été activé lorsque le système d'antipatinage à l'accélération de ladite une roue motrice (36b ou 36c) est activé.

4. Système d'antipatinage à l'accélération selon la revendication 2, caractérisé en outre en ce que ledit système comporte les étapes consistant à ajouter une fonction de l'accélération de roue de ladite une roue motrice au niveau de pression souhaité déterminé préalablement lors de chaque cycle de calcul et à ajouter une fonction de la différence de la vitesse de roue de ladite une roue et ladite vitesse de référence au niveau de pression souhaité déterminé préalablement, lors de chaque calcul pour établir une nouvelle valeur du niveau de pression souhaité pour le cycle de calcul.

5. Système d'antipatinage à l'accélération selon la revendication 3, caractérisé en outre en ce que ledit système comporte les étapes consistant à établir quand la vitesse de roue de ladite une roue motrice (36b ou 36c) tombe en dessous de la vitesse de référence et à diminuer ledit niveau de pression souhaité d'un incrément prédéterminé au cours de chaque cycle de calcul successif tant que le système d'antipatinage à l'accélération de ladite une roue motrice (36b ou 36c) reste activé et que ladite une roue motrice (36b ou 36c) reste en dessous de ladite vitesse de référence.

6. Système d'antipatinage à l'accélération selon la revendication 5, caractérisé en outre en ce que ledit système comporte les étapes consistant à prédéfinir le niveau de pression souhaité égal à zéro et à désactiver le système d'antipatinage à l'accélération pour ladite une roue motrice (36b ou 36c) lorsque le niveau de pression souhaité calculé tombe en dessous d'un niveau de pression préétabli.

7. Système d'antipatinage à l'accélération selon la revendication 1, caractérisé en outre en ce que ledit système comporte l'étape consistant à désactiver le système d'antipatinage à l'accélération de ladite une roue motrice (36b ou 36c) si la vitesse de référence dépasse une limite prédéterminée.
